# DEMANDE DE BREVET EUROPEEN

(11) **EP 3 730 722 A1**
(43) Date de publication de la demande: **28.10.2020**
(21) Numéro de dépôt: 20168657.3
(22) Date de dépôt: 08.04.2020
(51) Int. Cl.: E04G 15/06, F16L 59/02, F16L 5/04

(54) **CAISSON ET PROCÉDÉ D'ISOLATION THERMIQUE POUR ÉLÉMENTS TECHNIQUES**

(30) Priorité: 12.04.2019 CH 4992019; 17.05.2019 CH 6432019
(71) Demandeur: Easy Technic SA, 1630 Bulle (CH)
(72) Inventeur: Sonney, Nicolas, 1624 Grattavache (CH); Guillet, Laurent, 1628 Vuadens (CH)
(74) Mandataire: P&TS SA (AG, Ltd.)

(57) **Abrégé**

Procédé de protection ignifuge des éléments techniques d'un bâtiment au moyen d'un ou plusieurs caissons d'isolation préfabriqués, permettant le pré-calfeutrage d'un espace vacant dans la structure d'un bâtiment. Le caisson comprend un matériau ignifuge facilement modelable et est disposé avant le coulage du béton de la structure du bâtiment. Le caisson préfabriqué est ensuite évidé de manière à installer les éléments techniques devant être protégés du feu.

## Description

### Domaine technique

La présente invention concerne l'isolation thermique des éléments techniques d'un bâtiment et en particulier leur isolation au feu. La présente description se réfère notamment à un caisson d'isolation comprenant une matière ignifuge, ainsi qu'à une méthode d'isolation ignifuge des éléments techniques à incorporer dans le bâtiment.

### Etat de la technique

Traditionnellement, les structures en béton des bâtiments en construction sont coulées dans leur intégralité sans tenir compte des éventuels passages d'éléments techniques tels que gaines ou tuyauteries. Cette pratique nécessite de percer le béton après coup pour y loger les éléments techniques indispensables au fonctionnement du bâtiment. Cela demande du temps et des efforts, ce qui est préjudiciable aux délais de livraison et aux coûts de construction.

En outre, lorsque les passages sont aménagés dans la structure en béton, il est usuel de calfeutrer les éléments techniques après leur mise en place en insérant dans l'espace restant une matière ignifuge. L'installation de la matière ignifuge après coup peut être rendue délicate pour des raisons d'encombrement ou de facilité d'accès. L'opération de calfeutrage est alors délicate et peut ne pas conduire à une protection optimale.

Selon les pratiques traditionnelles, les percements des structures en béton sont protégées par du bois ou des panneaux en caillebotis vissés dans le béton, en attendant l'installation des éléments techniques, de manière à éviter au personnel d'éventuels accidents. Cette opération prend du temps sur la réalisation de l'ouvrage.

Il convient alors d'améliorer le procédé pour permettre de réduire les coûts et les délais de construction, tout en améliorant la qualité de la protection contre les incendies.

### Bref résumé de l'invention

La présente invention vise à pallier à ces difficultés. Notamment la présente invention couvre un procédé de protection ignifuge des éléments techniques d'un bâtiment au moyen d'un caisson d'isolation préfabriqué. Le caisson d'isolation comprend ou est constitué de matière ignifuge.

Le procédé comprend une étape b) de pré-calfeutrage, lors de laquelle un caisson d'isolation est disposé dans un espace vacant, destiné à accueillir les éléments techniques du bâtiment.

Le procédé comprend une étape de coulage c) lors de laquelle le béton de la structure en béton du bâtiment est coulé autour du caisson d'isolation, de sorte à emprisonner le caisson dans le béton, au moins par ses surfaces latérales. Les surfaces latérales désignent les surfaces du caisson d'isolation perpendiculaires au plan de la structure en béton du bâtiment.

Le procédé comprend une étape d) d'évidement du caisson d'isolation, lors de laquelle le caisson d'isolation est perforé. De préférence, la perforation est effectuée en partie centrale de sorte à laisser un volume substantiel du caisson isolant entre la structure en béton et les éléments techniques qui doivent être intégrés.

Le procédé comprend une étape d'installation e) d'éléments techniques dans, ou à travers l'évidement du caisson d'isolation.

Le procédé peut en outre comprendre une étape a) de ferraillage lors de laquelle les fers à béton sont disposés pour construire la structure en béton du bâtiment. Le ferraillage est alors effectué de sorte à laisser au moins un espace vacant, dans lequel le caisson d'isolation est mis en place lors de l'étape b) de pré-calfeutrage. L'étape de ferraillage a), bien qu'elle puisse être effectuée avant le positionnement du caisson d'isolation, elle est de préférence effectuée après la disposition du caisson d'isolation.

Le cas échéant, le caisson d'isolation est disposé de façon à venir en contact avec les fers à bétons, ou à être interconnectés avec l'extrémité des fers à béton disposés lors de la première étape a). Dans le cas où le ferraillage est effectué après la disposition du caisson d'isolation, les fers à bétons sont disposés de manière à venir en contact avec le caisson d'isolation ou à être interconnectés avec celui-ci. Le caisson d'isolation peut comporter un ou plusieurs évidements latéraux pour permettre le passage de fers é béton.

L'étape c) de coulage peut être effectuée de sorte à faire effleurer la surface visible du caisson d'isolation installé lors de la seconde étape b), avec la surface de la structure en béton, une fois coulée, ou de façon à recouvrir partiellement ou totalement la surface visible du caisson d'isolation, ou de façon à laisser une partie du caisson d'isolation saillir de la surface de la structure en béton une fois coulée. La surface visible désigne la surface du caisson d'isolation parallèle au plan de la structure en béton. Elle est par conséquent orthogonale aux surfaces latérales.

L'étape d'évidement d) est de préférence effectuée à la main ou à l'aide d'outils manuels tels que couteau, spatule ou équivalent.

Une sixième étape f) d'imperméabilisation peut être prévue à l'issue des étapes précédemment décrites. Le procédé s'effectue alors suivant la séquence : des première a), seconde b), troisième c), quatrième d) et cinquième étapes e), qui sont effectuées de manière chronologique dans cet ordre. Les premières a) et secondes étapes b) peuvent être inversées.

L'objet de la présente invention est également un caisson d'isolation comprenant une matière ignifuge facilement modelable, ou constitué d'une matière ignifuge facilement modelable, optionnellement recouverte d'une couche de matière imperméable. Le caisson d'isolation est adapté pour être incorporé à une structure en béton d'un bâtiment. La matière ignifuge est sélectionnée de préférence parmi la laine de roche ou la laine de verre compactée. La densité en est préférablement égale ou supérieure à 150 kg/m³. Le caisson d'isolation peut être recouvert totalement ou partiellement d'une peinture intumescente.

L'objet de la présente invention comprend en outre toute structure en béton comprenant au moins un caisson d'isolation tel que décrit ci-dessus. La structure en béton peut désigner l'armature en béton d'un bâtiment, ou tout élément en béton destiné à être intégré à l'armature en béton du bâtiment lors de sa construction, et pouvant être assemblée au reste du bâtiment, avant d'évider le caisson d'isolation et d'installer les éléments techniques à protéger.

### Brève description des figures

Des exemples de mise en oeuvre de l'invention sont indiqués dans la description illustrée par les figures annexées:

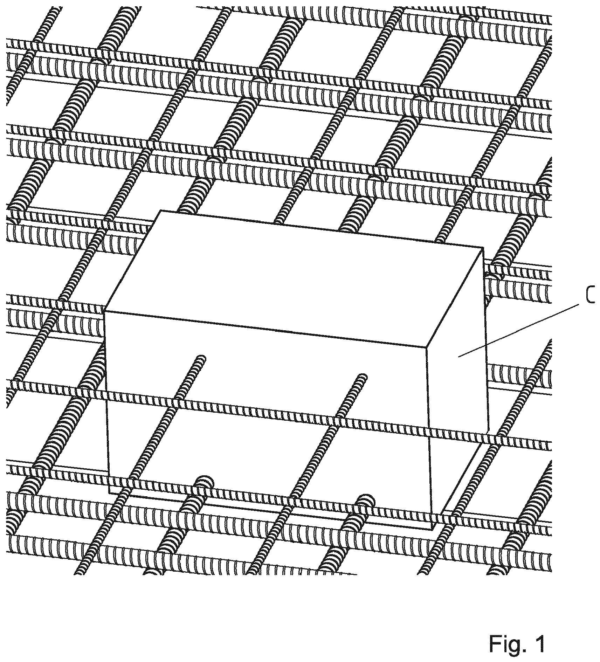

- Figure 1 : caisson d'isolation disposé avant coulage du béton.

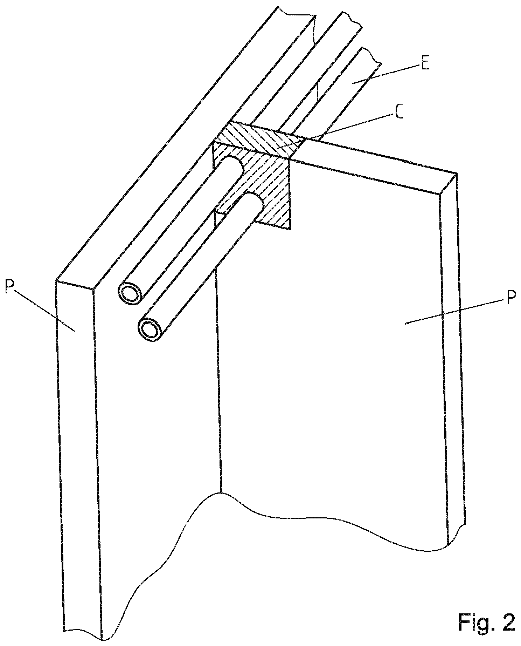

- Figure 2 : vue schématique d'un caisson d'isolation intégré à la structure du bâtiment.
- Figure 3 : vue schématique d'un caisson d'isolation selon un mode de réalisation.

### Exemple(s) de mode de réalisation de l'invention

La présente invention se rapporte à un caisson d'isolation thermique **C** destiné à protéger du feu les éléments techniques d'un bâtiment. Le caisson d'isolation **C** comprend en particulier une matière ignifuge résistant au feu au moins 30 minutes, voire 60 minutes, voire 90 minutes et plus. La résistance au feu est déterminée selon les dispositions de la norme AEAI en vigueur.

Le caisson d'isolation **C** est un bloc constitué d'une matière ignifuge **C1** telle que de la laine de roche, ou des matériaux plus durs. De préférence, le caisson d'isolation **C** utilisé pour les besoins de l'invention est constitué d'une matière facilement modelable de manière à pouvoir l'évider et insérer les éléments techniques du bâtiment. La laine de roche est un matériau RF1, tel que défini dans la directive de protection incendie «matériaux et éléments de construction» actuellement en vigueur, et est particulièrement adaptée à cet effet. De tels matériaux peuvent être compactés de manière à maintenir une forme propre et rigide. Les matériaux RF1 sont définis comme n'ayant aucune contribution au feu.

Les termes «facilement modelable» désignent une matière pouvant être travaillée à la main, ou avec un outil manuel tel qu'un couteau ou une spatule ou équivalent. Une telle matière permet de s'affranchir des matériels lourds et encombrants tels que marteaux piqueurs et perforateurs électriques ou pneumatiques. Une telle matière permet en outre de gagner tu temps dans la mise en place d'éléments techniques **E.**

Le caisson d'isolation **C** prend les dimensions nécessaires à l'emplacement des éléments techniques **E** du bâtiment. Il peut par exemple prendre la forme d'un cube ou d'un parallélépipède rectangle d'épaisseur de l'ordre de 20 cm, 30 cm, 50 cm ou plus. La largeur est adaptée aux éléments techniques **E** à incorporer dans le bâtiment lors de sa construction. Une largeur de quelques dizaines de centimètres peut être suffisante. La largeur peut s'étendre jusqu'à 1 m, 2 m, 3 m ou plus en fonction des dimensions des éléments techniques. La longueur est adaptable dans les mêmes proportions, soit de l'ordre de quelques dizaines de centimètres à 1 m ou 2 m ou 3 m ou plus.

Les éléments techniques **E** désignent toute installation à intégrer au bâtiment lors de sa construction. Ils incluent les réseaux de chauffage, de sanitaires, les conduites en polychlorure de vinyle (PVC) ou en polyéthylène (PE), les gaines d'aération, les caissons de ventilation, les boitiers électriques, les chemins de câbles électriques, les éventuels dispositifs de surveillance intégrés à la structure du bâtiment, incluant les dispositifs de surveillance de l'intégrité du bâtiment le cas échéant, des dispositifs de communication ainsi que leurs connections, des dispositifs d'air conditionné ou de chauffage.

Le caisson d'isolation **C** peut être recouvert d'une couche de matière imperméable à l'eau **C2,** de manière à préserver la matière ignifuge de l'humidité, notamment lors de son entreposage ou de son transport. La couche **C2** imperméable à l'eau peut être une couche d'aluminium, ou bien une couche polymère telle qu'une matière plastique, ou un mélange de plusieurs couches de matériaux différents. La couche imperméable à l'eau **C2** peut par exemple être constituée d'une première couche de matière cartonnée pour lui conférer la rigidité nécessaire à son maintien, et une seconde couche imperméable d'aluminium ou de plastique. Elle peut être par exemple du type TétraPack® incluant une couche de carton résistant à l'eau, dont l'une ou les deux faces sont recouvertes d'un polymère tel que polyéthylène, et comprenant une couche d'aluminium, éventuellement accolé à une couche de polymère telle que du polyéthylène. La couche imperméable à l'eau **C2** peut être une couche d'élastomère telle que du caoutchouc ou un thermoplastique.

Le caisson d'isolation **C** est destiné être disposé dans la structure en béton **P** du bâtiment. Il peut être par exemple disposé entre deux parties du bâtiment en construction, telles que deux étages ou deux pièces contigües, avant le coulage du béton. De cette manière le caisson d'isolation **C** se retrouve intégré dans la structure du bâtiment **P** à des emplacements identifiés au préalable lors de la conception du bâtiment. La structure en béton **P** du bâtiment désigne pour les fins de la présente invention tout élément structurel façonné en béton. La structure en béton **P** inclut donc toute paroi verticale, toute dalle ou plancher horizontaux, toute structure préfabriquées et incorporée au bâtiment lors de sa construction.

En l'occurrence, le caisson d'isolation **C** peut être intégré à l'armature métallique, comprenant les fers à béton, aux endroits où seront disposés les éléments techniques **E** du bâtiment.

Lorsque le béton est coulé, le caisson d'isolation **C** est de préférence encore visible et accessible pour pouvoir être évidé dans les proportions nécessaires à l'installation des éléments techniques **E.** Le caisson d'isolation **C** est donc dimensionné pour affleurer la surface de la structure en béton **P** une fois terminée. Alternativement, Le caisson d'isolation **C** est dimensionné de manière à dépasser de quelques centimètres, de l'ordre de 1, 2, 5 ou 10 cm ou 15 cm ou plus de la surface de la structure en béton **P** une fois terminée, de manière à compenser l'épaisseur d'un éventuel revêtement sur la surface de la structure en béton **P.** Sur une paroi verticale, un tel revêtement peut comprendre par exemple une couche d'isolant thermique disposé aux fins d'économie d'énergie.

Alternativement, le caisson d'isolation **C** peut être dimensionné de manière à rester en retrait par rapport à la surface de la structure en béton **P.** Dans ces conditions, le caisson d'isolation **C** est recouvert d'une faible épaisseur de béton lors de son coulage, de l'ordre de 1, 2, 5 ou 10 cm. La couche de béton recouvrant le caisson d'isolation **C** peut cependant être facilement brisée ultérieurement, du fait de sa faible épaisseur et donc de sa faible résistance. Une fois le béton recouvrant le caisson d'isolation **C** étant éliminé, l'espace peut être exploité pour disposer sur le caisson d'isolation **C** une couche de matériaux imperméable à l'eau pour assurer l'étanchéité de l'assemblage du caisson d'isolation avec la structure du bâtiment. Alternativement ou en plus, un matériau décoratif ou d'habillage peut y être disposé. L'épaisseur du matériau ainsi rajouté peut être définie pour affleurer avec la surface de la structure en béton **P.**

Le caisson d'isolation **C** permet par exemple un ajourage entre deux étages pour permettre le passage de gaines techniques verticales qui longent la structure en béton **P** du bâtiment sur toute sa hauteur ou sur une portion substantielle de sa hauteur. L'épaisseur du caisson d'isolation **C** peut être déterminée pour correspondre à l'épaisseur de la dalle en béton une fois coulée. Il s'ensuit que le caisson d'isolation **C** est encore visible après que la dalle séparant les deux étages est coulée. Il peut ensuite être évidé pour permettre le passage des gaines techniques d'un étage à l'autre.

Le même principe est applicable pour les parois verticales, qui doivent être ajourées pour permettre le passage d'éléments techniques de part et d'autre de ces parois.

Le caisson d'isolation **C** est de préférence suffisamment rigide pour conserver sa forme malgré les pressions exercées par le béton liquide lors de son coulage. De préférence la densité du caisson d'isolation **C,** lorsqu'il est en laine de roche est d'au moins de 150kg/m³. La densité peut cependant être supérieure en fonction des besoins ou de la matière utilisée dans la fabrication du caisson d'isolation **C.**

Le caisson d'isolation **C** est de plus suffisamment résistant pour permettre le passage d'une personne. En d'autres termes, le caisson d'isolation **C,** une fois incorporé à une dalle en béton par exemple, autorise les ouvriers à marcher dessus en toute sécurité, sans risque pour eux de tomber au niveau inférieur.

De manière optionnelle, le caisson d'isolation **C** peut être recouvert d'une matière rigide telle qu'un plastique dur ou une matière cartonnée. En plus ou alternativement, le caisson d'isolation **C** peut comprendre dans sa masse des renforts rigides tels que des barres de renfort. De tels renforts peuvent être intégrés au caisson d'isolation **C** et proches de sa surface de manière à ne pas entraver l'implantation des éléments techniques. De tels renforts peuvent être par exemple en matière plastique suffisamment rigide pour supporter le poids d'un homme. Les renforts du caisson d'isolation **C,** le cas échéant, doivent pouvoir être modelés ou retirés pour le passage éventuel des éléments techniques. Ils peuvent être facilement découpés ou rompus. Des renforts en PVC peuvent par exemple jouer ce rôle.

Le caisson d'isolation **C** permet avantageusement de s'affranchir des étapes de coffrage et de décoffrage usuellement pratiquées dans la construction d'un bâtiment. A cette fin, le caisson d'isolation **C** peut être prédécoupé sur mesure et au besoin modifié sur place et disposé avant le coulage du béton de la structure **P.**

Une ou plusieurs des surfaces du caisson d'isolation **C** peuvent comprendre des aspérités de manière à ancrer le caisson d'isolation **C** dans la structure en béton **P** du bâtiment. Plus particulière, les surfaces destinées à être en contact avec la structure en béton **P** peuvent être pourvues de une ou plusieurs excroissances, pouvant être coniques, rectangulaire, ou de formes différentes, et destinées à être coulées dans le béton de la structure **P.** De cette manière le caisson d'isolation **C** ne peut être retiré ou déplacé après que la structure en béton **P** est coulée. Alternativement ou en plus, une ou plusieurs des surfaces du caisson d'isolation **C** sont non planes de sorte à permettre l'ancrage du caisson d'isolation **C** dans la structure en béton **P.** Les surfaces du caisson d'isolation **C** peuvent être par exemple striées ou en forme de vagues.

Alternativement, le caisson d'isolation **C** est disposé de sorte à être partiellement pénétré par un ou plusieurs fers à bétons de la structure en béton **P.** Ainsi, le caisson d'isolation **C** est placé de manière non amovible avant le coulage de la structure en béton **P** autour des fers à béton. Une fois la structure en béton coulée, le caisson d'isolation **C** est immobilisé par l'extrémité des fers à béton et ne peut être retiré ou déplacé. Les fers à béton peuvent par exemple être incorporés au caisson d'isolation **C** sur une longueur de quelques centimètres, de l'ordre de 1, 2, 5 cm ou plus.

Alternativement, des systèmes d'ancrages indépendants, tels que des barres de scellement ou autres tiges rigides pouvant être fichées dans le caisson d'isolation **C,** sur une longueur de quelques centimètres, de l'ordre de 1, 2, 5 cm ou plus, au moment de son installation, peuvent être envisagés.

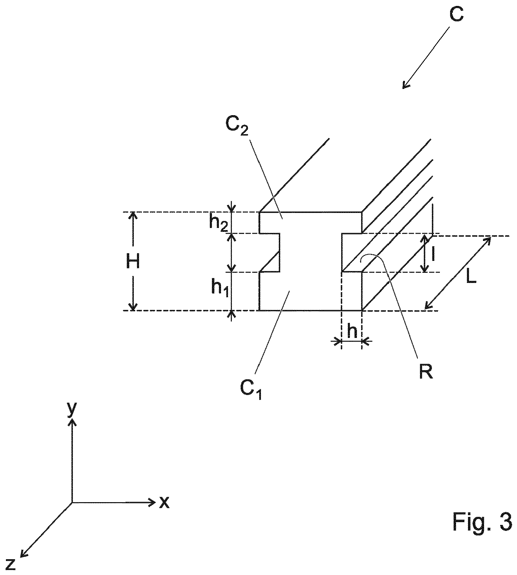

Alternativement, le caisson d'isolation **C** comporte un ou plusieurs évidements rectilignes traversant l'une ou plusieurs de ses faces, de manière à permettre le passage d'un ou plusieurs fers à béton. La figure 3 montre un exemple d'un tel arrangement. Selon cette disposition particulière, le caisson d'isolation **C** peut comporter un évidement rectiligne **E** traversant deux de ses faces latérales opposées sur toute leur longueur L. La profondeur de ces évidements **E** est de l'ordre de quelques centimètres et peut dépendre du diamètre des fers à béton utilisés. La profondeur **h** des évidements **E** peut être par exemple comprise entre 2 et 10 centimètres, de préférence entre 3 et 8 cm, ou de l'ordre de 5 cm environ. La largeur **l** de l'évidement **E** peut être égale ou différente de sa profondeur **h.** La largeur **l** est de préférence supérieure à sa profondeur **h.** La largeur I des évidements **E** est par exemple comprises entre 8 et 15 cm, de préférence de l'ordre de 10 cm environ. Les évidements **E** peuvent être centrés sur les faces latérales du caisson d'isolation **C.** Ils sont de préférence excentrés, soit vers la moitié supérieure soit vers la moitié inférieure du caisson d'isolation **C,** de sorte que les surfaces latérales inférieures et supérieures du caisson d'isolation **C** qui encadrent les évidements **E** ne sont pas égales. En d'autres termes, les hauteurs **h1** de la surface latérale inférieure et **h2** de la surface latérale supérieure, qui encadrent l'évidement **E** d'une face latérale du caisson d'isolation **C,** de hauteur totale **H,** sont différentes. Selon un mode de réalisation particulier, la hauteur **h1** d'une surface latérale inférieure est de l'ordre de 12 cm et la hauteur **h2** d'une surface latérale supérieure est de l'ordre de 8 cm. Selon une disposition particulière, la hauteur **h2,** définie par une surface latérale supérieure, correspond à l'épaisseur de la couche imperméable **C2** du caisson d'isolation **C.** La couche imperméable **C2** est disposée sur la surface supérieure du caisson d'isolation **C.** Les termes supérieur(e), inférieur(e), latéral(E), désignent les parties du caisson d'isolation **C** selon leur sens usuel, lorsque le caisson d'isolation **C** est orienté selon la figure 3.

Selon un autre aspect de l'invention, le caisson d'isolation **C** peut être intégré à un élément de la structure en béton **P** préfabriqué en usine. Par exemple, des parois ou éléments de dalles peuvent être préparés avec un ou plusieurs caissons d'isolation **C,** puis acheminés sur le chantier pour être intégrés au reste du bâtiment.

Le caisson d'isolation **C** peut être fabriqué à partir de laine de roche, également connue sous le nom de laine de pierre, sous forme pulvérulente ou préalablement extrudée, puis compactée. Un ou plusieurs additifs peuvent être inclus, notamment pour faciliter la cohésion de la matière première lors du pressage. Les additifs éventuels incluent les colles et des matériaux hydrophobes.

La présente invention couvre en outre un procédé d'isolation des éléments techniques E contre le feu.

Le procédé comprend une première étape a) de ferraillage au cours de laquelle les fers à bétons d'une structure en béton **P** sont disposés. Les fers à bétons de la structure **P** sont disposés de manière à laisser au moins un espace vacant, sans fers à béton. L'emplacement et les dimensions de cet espace vacant peuvent être prévus à l'avance lors de la conception du bâtiment. L'emplacement et les dimensions de cet espace vacant peuvent alternativement être déterminés sur place. Cette étape de ferraillage peut cependant être optionnelle. Lorsque les fers à béton ne sont pas nécessaires, le procédé commence par l'étape b).

Le procédé comprend une seconde étape b) de pré-calfeutrage lors de laquelle un caisson d'isolation **C,** tel que décrit ci-dessus est disposé dans l'espace vacant aménagé lors de l'étape a). Le caisson d'isolation **C** peut être disposé de manière à ne pas être en contact ni associé aux fers à béton de la structure **P.** Alternativement, le caisson d'isolation **C** peut être disposé de manière à être en contact étroit avec les fers à béton, voire interconnecté avec l'extrémité des fers à béton, sur une distance de quelques centimètres, de l'ordre de 1, 2, 5 cm ou plus. Lorsque l'étape a) n'est pas requise, le caisson d'isolation **C** peut être maintenu par tout autre mayen de fixation tel que des pattes de fixation vissées ou clouées sur une structure support.

Le procédé comprend une troisième étape c) de coulage lors de laquelle le béton est coulé pour former la structure en béton **P** du bâtiment. Le béton est coulé de manière à venir en contact avec le caisson d'isolation **C** dont les surfaces servent de coffrage. Le béton de la structure en béton **P** peut être coulé de telle manière à effleurer la surface visible du caisson d'isolation **C.** alternativement, le béton peut être coulé de manière à recouvrir partiellement ou totalement le caisson d'isolation **C.** En fonction des besoins, le béton de la structure en béton **P** peut être coulé de manière à laisser dépasser une surface visible du caisson d'isolation **C,** qui forme alors un décrochement par rapport à la surface de la structure en béton **P** une fois coulée.

Le procédé comprend une quatrième étape d) d'évidement du caisson d'isolation **C.** Le caisson d'isolation **C** est perforé, de préférence dans sa partie centrale, dans les dimensions qui correspondent aux dimensions de l'élément technique **E,** ou des éléments techniques **E** à incorporer. L'évidement s'effectue à main nue ou à l'aide d'outils manuels, tels que spatules, couteau, éventuellement burins. De préférence, l'évidement du caisson d'isolation **C** ne nécessite aucun outil mécanisé. Dans le cas où le caisson d'isolation **C** est recouvert par une couche de béton lors de l'étape c), l'étape d'évidement d) comprend la destruction de cette couche de béton. De préférence la destruction de la couche de béton peut être effectuée sans outil mécanisé, mais à l'aide d'outils manuels tels que marteau, masse, éventuellement burin. Dans le cas où le caisson d'isolation comporte une couche **C2** imperméable à l'eau, l'étape d'évidement comprend la destruction de cette couche **C2** de matière imperméable. Lorsque le caisson d'isolation **C** comprend un ou plusieurs renforts, l'étape d'évidement du caisson d'isolation **C** peut comprendre la destruction d'un ou plusieurs de ces renforts. De préférence ces renforts peuvent être facilement détruits é la main ou à l'aide d'outils manuels tels que ciseau, burin ou scie. Les dimensions de l'évidement du caisson d'isolation **C** correspondent à celle des éléments techniques **E** à incorporer, éventuellement augmentées d'un jeu nécessaire à l'installation de ces éléments techniques **E.** Le jeu peut être de l'ordre de quelques millimètres ou de quelques centimètres en fonction de la taille et de la forme des éléments techniques **E** à incorporer.

Dans le cas où la structure en béton **P** est une structure préfabriquée devant être intégrée à une construction en cours, une étape c2) d'assemblage de la structure en béton **P** au reste du bâtiment doit être prévue avant l'étape d) d'évidement du caisson d'isolation.

Le procédé comprend une cinquième étape e) de mise en place des éléments techniques **E** dans le caisson d'isolation **C.** Les éléments techniques **E** sont ceux énumérés plus haut. La liste n'est cependant pas exhaustive. Il est entendu que tout élément destiné au fonctionnement du bâtiment et à son intégrité, et devant faire l'objet d'une protection ignifuge peut être considéré comme élément technique **E** pour les besoins de la présente invention. Les éléments techniques E comprennent en outre les éventuels accessoires tels que les couches d'isolation thermique pour éviter la condensation, les structures de renfort, les éléments d'habillage. Le ou les éléments techniques **E** sont disposés dans l'évidement aménagé lors de la quatrième étape d).

Le procédé peut comprendre une sixième étape f) d'imperméabilisation, de manière à rendre étanche à l'eau l'assemblage du caisson d'isolation **C** avec la structure en béton **P.** Cette étape f) n'est pas obligatoire. Elle est notamment superflue dans les parties internes du bâtiment. Elle peut cependant se révéler nécessaire pour les parties externes du bâtiment, notamment pour ce qui concerne les toitures et les murs extérieurs. L'étape d'imperméabilisation f) peut comprendre l'aspersion, la dispersion, ou l'insertion dans les espaces intercalaires d'une matière imperméable telle qu'une pâte siliconée. Alternativement ou en plus, l'imperméabilisation peut être effectuée à l'aide de papier goudronné, de mousse expansée, ou de tout autre moyen usuel dans le cadre de la construction immobilière.

Selon le procédé de la présente invention, les étapes a), b), c), d), e) et f) décrites ci-dessus sont pratiquées dans l'ordre exposé. Selon une variante préférée, les étapes b), a), c), d), e) et f) décrites ci-dessus sont effectuées dans cet ordre. Selon cette seconde disposition, les fers à béton disposés lors de l'étape a) de ferraillage peuvent s'inscrire dans les évidements longitudinaux du ou des caissons d'isolation (C) de sorte à en prévenir d'éventuels déplacements lors de la mise en œuvre des étapes suivantes, en particulier les déplacements verticaux et/ou latéraux lors de l'étape de coulage c).

### Numéros de référence employés sur les figures

- C: Caisson d'isolation
- C1: Matière ignifuge
- C2: Couche de matière imperméable à l'eau
- E: Eléments techniques
- P: Structure en béton du bâtiment
- L: Longueur du caisson d'isolation
- R: Evidement
- l: Largeur de l'évidement
- H: Hauteur du caisson d'isolation
- h: Profondeur de l'évidement
- h1: Hauteur de la face latérale inférieure du caisson d'isolation
- h2: Hauteur de la face latérale supérieure du caisson d'isolation

## Revendications

1. Procédé de protection ignifuge des éléments techniques (E) d'un bâtiment au moyen d'un ou plusieurs caissons d'isolation (C) préfabriqués, le procédé comprenant :
- une étape b) de pré-calfeutrage, lors de laquelle un caisson d'isolation (C) préfabriqué comprenant une matière ignifuge est disposé dans un espace vacant, laissé libre pour le passage d'éléments techniques (E) dans une structure en béton (P),
- une étape de coulage c) lors de laquelle le béton de la structure en béton (P) est coulé autour du ou des caissons d'isolation (C) jusqu'à venir en contact avec le ou les caissons d'isolation (C) disposés lors de l'étape b),
- une étape d) d'évidement du ou des caissons d'isolation (C), lors de laquelle le ou les caissons d'isolation (C) sont perforés en leur partie centrale,
- une étape d'installation e) d'éléments techniques (E) dans, ou à travers l'évidement du ou des caissons d'isolation (C) disposés lors de l'étape b),
**Caractérisé en ce que** le ou les plusieurs caissons d'isolation (C) préfabriqués comportent un évidement rectiligne E traversant deux de ses faces latérales opposées sur toute leur longueur L et **en ce que** ladite méthode comporte une étape a) de ferraillage lors de laquelle des fers à béton sont disposés pour construire la structure en béton (P) du bâtiment de façon à s'inscrire dans lesdits évidements rectilignes (E).

2. Procédé selon la revendication 1, dans lequel l'étape c) de coulage est effectuée de sorte à faire effleurer la surface visible du ou des caissons d'isolation (C) installés lors de la seconde étape b), avec la surface de la structure en béton (P), une fois coulée, ou de façon à recouvrir partiellement ou totalement la surface visible du caisson d'isolation (C), ou de façon à laisser une partie du ou des caissons d'isolation (C) saillir par rapport à la surface de la structure en béton (P) une fois coulée.

3. Procédé selon l'une des revendications 1 et 2, dans lequel l'étape d'évidement d) est effectuée à la main ou à l'aide d'outils manuels tels que couteau, spatule ou équivalent.

4. Procédé selon l'une des revendications 1 à 3, comprenant en outre une sixième étape f) d'imperméabilisation.

5. Procédé selon l'une ou l'autre des revendications 1 à 4, dans lequel les étapes b), a), c), d), e) et f) sont effectuées de manière chronologique dans cet ordre.

6. Caisson d'isolation (C) comprenant une matière ignifuge facilement modelable, optionnellement recouverte d'une couche de matière imperméable, adapté pour être incorporé à une structure en béton (P) d'un bâtiment, **caractérisé en ce que** ledit caisson d'isolation comprend un évidement rectiligne € traversant deux de ses faces latérales opposées sur toute leur longueur L.

7. Caisson d'isolation (C) selon la revendication 6, **caractérisé en ce que** la matière ignifuge est un matériau de type RF1, tel que défini dans la directive de protection incendie «matériaux et éléments de construction» actuellement en vigueur.

8. Caisson d'isolation selon l'une des revendications 6 et 7, caractérisé en ce ledit caisson d'isolation est constitué d'un matériau compacté maintenant une forme propre..

9. Caisson d'isolation selon l'une des revendications 6 à 8, **caractérisé en ce qu'**il est constitué de laine de roche.

10. Caisson d'isolation (C) selon l'une ou l'autre des revendications 6 à 9, **caractérisé en ce que** sa densité est égale ou supérieure à 150 kg/m³.

11. Caisson d'isolation selon l'une des revendications 6 à 10, **caractérisé en ce que** la profondeur (h) desdits évidements (E) est comprise entre 2 et 10 centimètres et **en ce que** la largeur (I) desdits évidements est comprise entre 8 et 15 centimètres.

12. Caisson d'isolation selon l'une des revendications 6 à 11, **caractérisé en ce que** les hauteurs (h1) et (h2) séparant l'évidement (E) des bords du caisson d'isolation sont différentes.

13. Caisson d'isolation selon l'une des revendications 6 à 12, **caractérisé en ce que** la hauteur (h2) de la latérale supérieure séparant l'évidement (E) du bord supérieur du caisson d'isolation, correspond à l'épaisseur C2 de la couche imperméable du caisson d'isolation.

14. Structure en béton (P) comprenant un ou plusieurs caissons d'isolation (C) tel que décrit dans les revendications 6 à 13.
